# EUROPEAN PATENT APPLICATION

(11) **EP 2 372 827 A1**
(43) Date of publication of application: **05.10.2011**
(21) Application number: 11250399.0
(22) Date of filing: 29.03.2011
(51) Int. Cl.: H01M 10/42, H01M 6/50

(54) **Sencodary battery pack**

(30) Priority: 29.03.2010 US 318740; 20.12.2010 US 973595
(71) Applicant: Samsung SDI Co., Ltd., Yongin-si, Gyeonggi-do (KR)
(72) Inventor: Jang, Young-Cheol, Gyeonggi-do (KR)
(74) Representative: Taor, Simon Edward William

(57) **Abstract**

There is provided a protection circuit module for a battery pack that inciudes a battery cell having at least one electrode tab. The protection circuit module comprises a printed circuit board substrate; a temperature safety device adapted to increase its electrical resistance with increased temperature; a positive temperature coefficient element adapted to be coupled to an electrode tab of the battery cell. The temperature safety device positive temperature coefficient element is at least partially contained within embedded in the printed circuit board substrate.

## Description

One or more embodiments of the present invention relate to a secondary battery pack that allows a positive temperature coefficient (PTC) element to be easily electrically connected to an electrode tab of a battery cell.

In general, secondary batteries refer to batteries that are rechargeable and dischargeable, unlike primary batteries that are not rechargeable. Secondary batteries are used as energy sources for mobile devices, such as a notebook computer and a mobile phone, electric vehicles, hybrid electric vehicles, electric bicycles, and uninterruptible power supply devices.

Secondary battery packs include a safety device assembly. Examples of the safety device assembly may include a positive temperature coefficient (PTC) element, a safety vent, a current interrupt device, a thermal fuse, and a shut-down separator.

Among safety elements, the PTC element cuts off current by increasing the resistance of the PTC element when the temperature of a secondary battery exceeds a predetermined temperature.

One or more embodiments of the present invention include a secondary battery pack that improves the heat transfer efficiency of a battery cell by allowing a positive temperature coefficient (PTC) element to be easily electrically connected to an electrode tab of the battery cell.

According to an aspect of the invention, there is provided a protection circuit module for a battery pack that includes a battery cell having at least one electrode tab, the protection circuit module comprising: a printed circuit board substrate; a temperature safety device adapted to increase its electrical resistance with increased temperature; wherein the temperature safety device is at least partially contained within the printed circuit board substrate.

The temperature safety device can be at least partially embedded in the printed circuit board substrate. For example, the temperature safety device can be fully or partially embedded in the printed circuit board substrate

The temperature safety device can be a positive temperature coefficient element or other suitable device.

The protection circuit module can further comprise a plate located on an outer surface of the printed circuit board substrate and in electrical contact with the temperature safety device, wherein the plate is adapted to be electrically connected to an electrode tab of the battery cell. The plate can be metal, for example nickel or a nickel based alloy.

In some embodiments with a plate, the plate can be electrically connected to the temperature safety device through at least one via hole that extends from the outer surface of the printed circuit board substrate, the via holes being filled with a conductive material. In some embodiments with a plate, the plate can be electrically connected to the temperature safety device by a connector that is embedded in the printed circuit board substrate, wherein optionally the connector comprises at least one wire. In such embodiments, the temperature safety device may be fully embedded in the printed circuit substrate.

In some embodiments with a plate, the plate can directly contact the temperature safety device. In such embodiments, the temperature safety device may be partially embedded in the printed circuit board substrate.

In some embodiments, the temperature safety device is a positive temperature coefficient element that comprises a polymer-based conductive composite comprising a polymer and a conductive filler. In some embodiments, the polymer comprises high-density polyethylene, low-density polyethylene, polyvinylidene fluoride, polypropylene or ethylene/polypropylene polymer. In some embodiments, the conductive filler comprises carbon black, a carbon fiber, a metal or a metal oxide filler.

The protection circuit module can further comprise a plurality of electronic devices mounted on the printed circuit board substrate. In other words, the printed circuit board substrate may be the substrate for various electronic devices of the protection circuit module.

In some embodiments, there is at least some free space between the temperature safety device and the printed circuit board substrate. In other words, the temperature safety device can at least partially contained within the printed circuit board substrate with some free space around the temperature safety device. Such free space may be provided in embodiments in which the temperature safety device is fully or partially embedded in the printed circuit board substrate.

According to another aspect of the invention, there is provided a battery pack comprising: a battery cell having comprising an electrode assembly, a case housing the electrode assembly, a positive electrode tab and a negative electrode tab electrically coupled to the electrode assembly; a protection circuit module according to the first aspect, wherein the protection circuit module is coupled to the positive electrode tab and negative electrode tab of the battery cell.

In some embodiments with a plate the positive or negative electrode tab may be welded to the plate.
FIG. 1 is an exploded perspective view of a battery cell according to an embodiment of the present invention;
FIG. 2 is an exploded perspective view of a secondary battery pack including a protection circuit module that is coupled to the battery cell of FIG. 1, according to an embodiment of the present invention;
FIG. 3 is a cross-sectional view illustrating a positive temperature coefficient (PTC) element embedded in a printed circuit substrate of the secondary battery pack of FIG. 2, according to an embodiment of the present invention;
FIG. 4 is a cross-sectional view illustrating a PTC element embedded in a printed circuit substrate of the secondary battery pack of FIG. 2, according to another embodiment of the present invention;
FIG. 5 is an exploded perspective view of a secondary battery pack according to another embodiment of the present invention;
FIG. 6 is a cross-sectional view of a modification of FIG. 1, illustrating a PTC element embedded in a printed circuit substrate of the secondary battery pack according to another embodiment of the present invention;
FIG. 7 is a graph illustrating a result of an overcharge test performed on a conventional secondary battery pack including a conventional PTC element; and
FIG. 8 is a graph illustrating a result of an overcharge test performed on the secondary battery pack including the PTC element of FIG. 2.

Reference will now be made in detail to embodiments of the invention, examples of which are illustrated in the accompanying drawings.

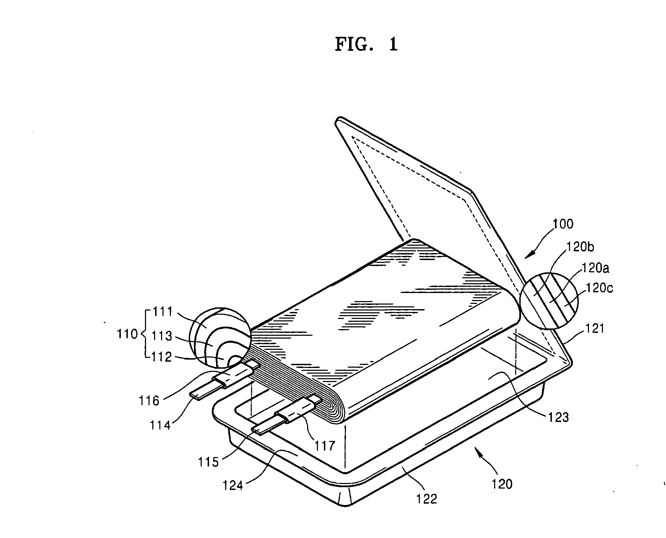

FIG. 1 is an exploded perspective view of a battery cell 100 according to an embodiment of the present invention.

Referring to FIG. 1, the battery cell 100, which is a lithium polymer battery cell, includes an electrode assembly 110, and a case 120 in which the electrode assembly 110 is received. The electrode assembly 110 includes a positive electrode plate 111, a negative electrode plate 112, and a separator 113 disposed between the positive electrode plate 111 and the negative electrode plate 112.

A positive electrode tab 114 is electrically connected to the positive electrode plate 111. A positive electrode insulating tape 116 is wound around the positive electrode tab 114. A negative electrode tab 115 is electrically connected to the negative electrode plate 112. A negative electrode insulating tape 117 is wound around the negative electrode plate 115.

The case 120 includes a metal foil 120a, and insulating films 120b and 120c formed on both surfaces of the metal foil 120a. The case 120 is a flexible pouch-type case. The case 120 includes an upper case 121, and a lower case 122 coupled to the upper case 121. The upper case 121 and the lower case 122 are integrally formed at least one edge thereof.

The electrode assembly 110 is located in a space portion 123 of the case 120. The positive electrode insulating tape 116 and the negative electrode insulating tape 117 are thermally bonded to a sealing surface 124 of the case 120. An end of the positive electrode tab 114 and an end of the negative electrode tab 115 are exposed to the outside of the case 120 that is sealed.

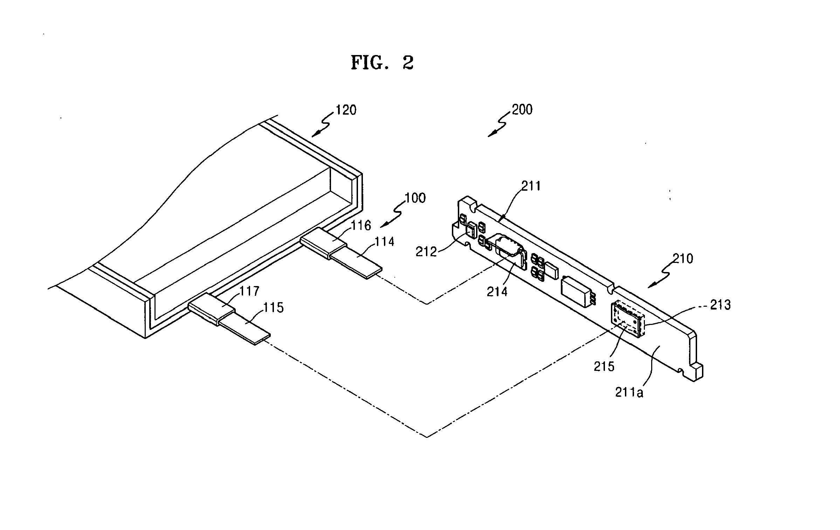

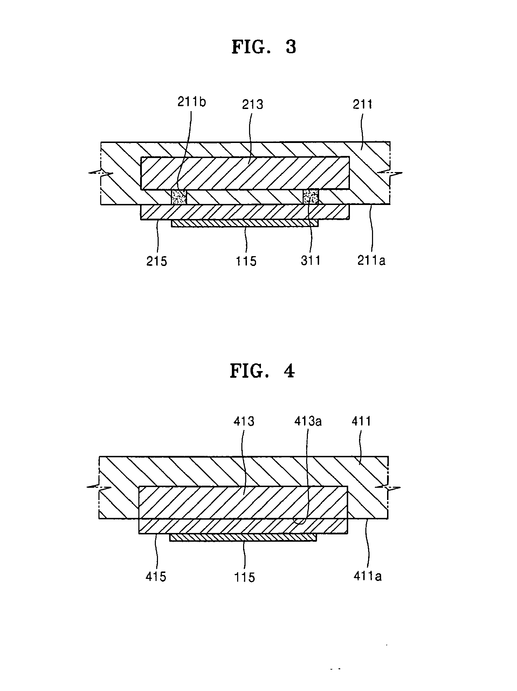

FIG. 2 is an exploded perspective view of a secondary battery pack 200 including a protection circuit module (PCM) 210 that is coupled to the battery cell 100 of FIG. 1, according to an embodiment of the present invention. FIG. 3 is a cross-sectional view illustrating a PTC element 213 embedded in a printed circuit substrate 211 of the secondary battery pack 200 of FIG. 2, according to an embodiment of the present invention.

The same elements as those in FIG. 1 are denoted by the same reference numerals. Although a secondary battery is a pouch-type secondary battery in FIGS. 1 through 3, embodiments of the present embodiment are not limited thereto, and the secondary battery may be a polygonal secondary battery formed of a thick metal material or a cylindrical secondary battery formed of a thick metal material.

Referring to FIGS. 2 and 3, the PCM 210 includes the printed circuit substrate 211, a plurality of electronic devices 212 mounted on the printed circuit substrate 211, and the PTC element 213 acting as a safety device. In other embodiments, alternative types of temperature safety devices such as a fuse could be used.

The printed circuit substrate 211 is a circuit substrate formed by stacking one or more circuit pattern layers. Examples of the electronic devices 212 may include integrated circuit (lC) chips, field effect transistors (FETs), resistors, and capacitors.

The PTC element 213 includes a polymer with conductive particles in this embodiment. However, other embodiments may use other PTC elements.

A polymer-based conductive composite may be a mixture of a polymer, a conductive filler, an antioxidant, and a crosslinking agent containing peroxide. The polymer may be a polymer with a melt index of 1 to 10 such as high-density polyethylene (HDPE), low-density polyethylene (LDPE), polyvinylidene fluoride (PVDF), polypropylene (PP) or ethylene/polypropylene polymer.

The conductive filler may be a carbon black, a carbon fiber, a metal such as nickel, or a metal oxide filler.

While the polymer is generally an insulating material, the polymer has high conductivity since the PTC element 213 provides a conductive path when the conductive particles are interconnected at room temperature or high temperature due to the conductive filler_{.}

If the temperature of the battery cell 100 is increased to exceed a specific temperature, or if over-current flows, the polymer included in the PTC element 213 is expanded and a distance between the conductive particles is increased to shut down the conductive path. The PTC element 213 is an example of a temperature safety device adapted to increase its electrical resistance with increased temperature. However, other embodiments of the invention may use other temperature safety devices. For example, fuses could be used.

The PTC element 213 is at least partially contained within the printed circuit board substrate. In some embodiments, the PTC element 213 is partially or fully embedded in the printed circuit substrate 211. In some embodiments, there is at least some free space between the temperature safety device and the printed circuit board substrate. In this case, the PTC element 213 may be normally operated by the PTC element 213 expanding into a predetermined free space in the printed circuit substrate 211 in which the PTC element 213 is embedded as the polymer included in the PTC element 213 is expanded. In other embodiments, where there is no free space between the PTC element 213 and the printed circuit substrate 211, the expansion of the PTC element 213 may be accommodated by the expansion of the printed circuit substrate 211.

The positive electrode tab 114 protruding from the case 120 is electrically connected to a first terminal 214 formed on the printed circuit substrate 211. The positive electrode tab 115 protruding from the case 120 is electrically connected to the PTC element 213 formed in the printed circuit substrate 211.

The PTC element 213 is embedded in one surface 211 a of the printed circuit substrate 211 facing the negative electrode tab 115 in this embodiment of the invention.

This will now be explained in detail.

The PTC element 213 is embedded in the printed circuit substrate 211. The PTC element 213 is embedded to a predetermined depth from the one surface 211 a of the printed circuit substrate 211 facing the negative electrode tab 115. The PTC element 213 is located to correspond to the negative electrode tab 115.

A metal plate 215 is installed between the PTC element 213 and the negative electrode tab 115 in this embodiment. That is, the metal plate 215 is attached to the one surface 211 a of the printed circuit substrate 211 to vertically correspond to the PTC element 213. The negative electrode tab 115 is spot-welded to a top surface of the metal plate 215. The metal plate 215 may be formed of a metal material having high conductivity. For example, the metal plate 215 may be a nickel plate or a nickel based alloy.

The metal plate 215 is electrically connected to the PTC element 213 through via holes 211 b. That is, the via holes 211 b are formed to extend from the one surface 211 a of the printed circuit substrate 211 to a surface of the PTC element 213. A conductive material 311, such as a cream solder, is filled in the via holes 211 b.

Accordingly, a bottom surface of the metal plate 215 is electrically connected to the PTC element 213 due to the conductive material 311. The top surface of the metal plate 215 is electrically connected to the negative electrode tab 115.

In the secondary battery pack 200 constructed as described above, if the temperature of the electrode assembly 110 of the battery cell 100 is increased during operation, heat is transferred in the order of the battery cell 100, the negative electrode tab 115, the metal plate 215, the conductive material 311, and the PTC element 213.

If the temperature of the battery cell 100 is increased to exceed a reference temperature, for example, 80°C, the resistance of the PTC element 213 is increased to cut off current. Accordingly, damage to the battery cell 100 may be prevented.

FIG. 4 is a cross-sectional view illustrating a PTC element 413 embedded in a printed circuit substrate 411 of the secondary battery pack 200 of FIG. 2, according to another embodiment of the present invention.

Referring to FIG. 4, the PTC element 413 is embedded in the printed circuit substrate 411. The PTC element 413 is not completely embedded in the printed circuit substrate 411 unlike in FIG. 3, and one surface 413a of the PTC element 413 is exposed to the outside of the printed circuit substrate 411. The one surface 413a of the PTC element 413 is aligned with the one surface 411 a of the printed circuit substrate 211. In other words, the PTC element 413 is partially embedded in the printed circuit substrate 411.

A metal plate 415 is installed between the one surface 413a of the PTC element 413 and the negative electrode tab 115. A bottom surface of the metal plate 415 is directly electrically connected to the one surface 413a of the PTC element 413. A top surface of the metal plate 415 is spot-welded to the negative electrode tab 115.

The PTC element 413 constructed as described above selectively cuts off the flow of current by detecting the temperature of the battery cell 100 (see FIG. 1) which is increased due to heat transferred through the negative electrode tab 115 and the metal plate 415.

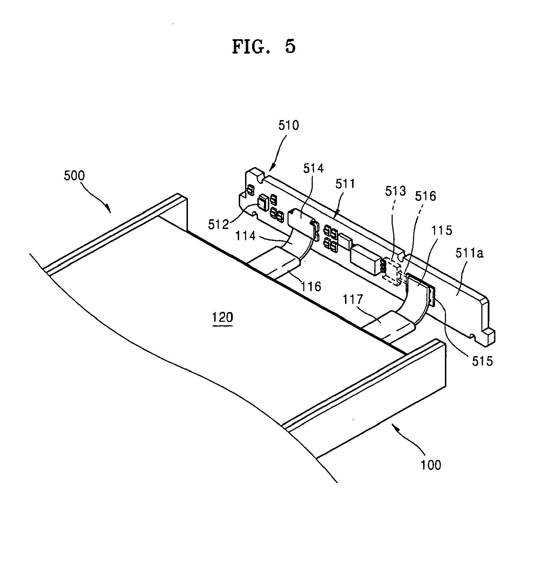

FIG. 5 is an exploded perspective view of a secondary battery pack 500 according to another embodiment of the present invention.

Referring to FIG. 5, a protection circuit module 510 includes a printed circuit substrate 511, a plurality of electronic devices 512 mounted on the printed circuit substrate 511, and a PTC element 513.

The positive electrode tab 114 protruding from the case 120 is electrically connected to a first terminal 514 formed on the printed circuit substrate 511. The negative electrode tab 115 protruding from the case 120 is electrically connected to the PTC element 513 formed in the printed circuit substrate 511.

The PTC element 513 is embedded in the printed circuit substrate 511. The PTC element 513 is embedded to a predetermined depth from one surface 511 a of the printed circuit substrate 511 facing the negative electrode tab 115. The PTC element 513 is located so as not to correspond to the negative electrode tab 115. That is, while the PTC element 213 or 413 is located to face the negative electrode tab 115 in FIG, 3 or 4, the PTC element 513 does not face the negative electrode tab 115 in FIG. 5.

The negative electrode tab 115 is electrically connected to a second terminal 515 formed on the printed circuit substrate 511. The PTC element 513 is electrically connected to the second terminal 515 by circuit wiring 516. The circuit wiring 516 is embedded in the printed circuit substrate 511, and one end of the circuit wiring 516 is connected to the PTC element 513 and the other end of the circuit wiring 516 is connected to the second terminal 515.

Alternatively, the PTC element 513 may be connected to the negative electrode tab 115 without a metal plate. For example, the PTC element 513 may be connected to the negative electrode tab 115 by the circuit wiring 516 that is patterned on the printed circuit substrate 511 without the second terminal 515.

The PTC element 513 constructed as described above selectively cuts off the flow of current by detecting the temperature of the battery cell 100 which is increased due to heat transferred through the second terminal 515 and the circuit wiring 516.

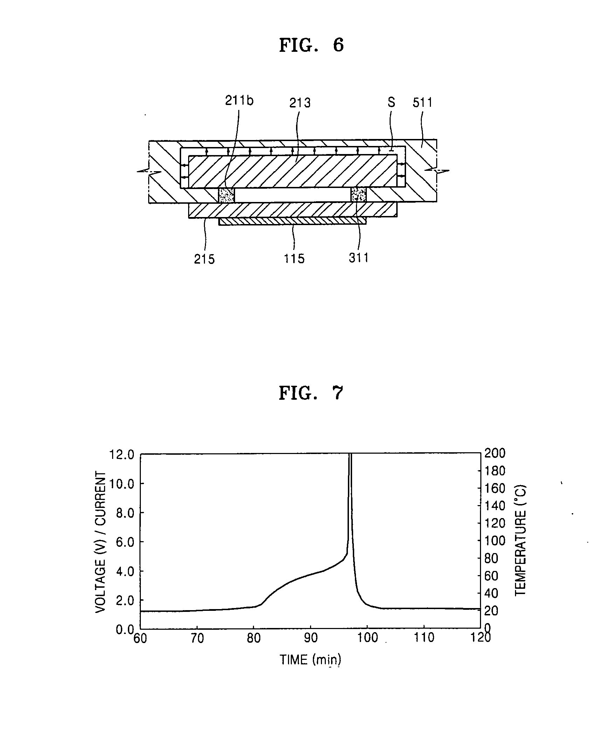

FIG. 6 is a cross-sectional view of a modification of FIG. 1, illustrating a PTC element 213 embedded in a printed circuit substrate 511 of the secondary battery pack 500 , according to an embodiment of the present invention. Referring to FIG. 6, a predetermined free space S is created between the printed circuit substrate 511 and the PTC element 213. The PTC element 213 buried in the printed circuit substrate 511 may undergo volume expansion as the polymer included in the PTC element 213 expands, and the free space S receives the expanded PTC element 213, thereby enabling the PTC element 213 to operate normally.

Although the PTC element is electrically connected to the electrode tab 115 in FIGS. 2 through 6, the embodiments are not limited thereto. That is, the PTC element may be connected to a positive electrode tab without departing from the scope of the embodiments of the present invention.

In an embodiment, a positive electrode tab and a negative electrode tab may be electrically connected to an external terminal through a switch device(not shown) for selectively turning on/off of the battery cell 100, and a battery management system (BMS, not shown) for monitoring and controlling states of charge and discharge of the battery cell 100. Here, the external terminal, to which a terminal of an external power supply device or a power terminal of an external load may be electrically connected, may be formed on the printed circuit substrate.

The switch device performs a switching function for selectively turning on or off the charge and discharge operation of the battery cell 100, and may include a field-effect transistor (FET). However, the present embodiment is not limited thereto, and the switch device may be an electrical device for performing other types of switching functions.

In order to protect the battery cell 100, the BMS may receive state information such as information about a charge/discharge voltage or current, and if the battery cell 100 shows abnormality such as overcharge or over-discharge, the BMS may turn off the switch device. The switch device and the BMS may be mounted on the printed circuit substrate or separately provided from the printed circuit substrate.

A result of an overcharge test performed by the applicant through an experiment will now be explained.

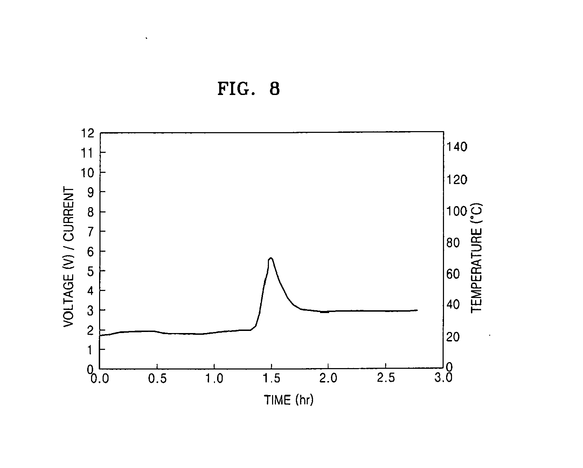

FIG. 7 is a graph illustrating a result of an overcharge test performed on a conventional secondary battery pack including a conventional PTC element. FIG. 8 is a graph illustrating a result of an overcharge test performed on the secondary battery pack 200 including the PTC element 213 of FIG. 2.

The conventional secondary battery pack is configured in such a manner that the conventional PTC element and an electrode terminal are mounted on a printed circuit substrate to be exposed, and the conventional PTC element and the electrode terminal are connected by circuit wiring, and an electrode tab of a battery cell is connected to the electrode terminal. Accordingly, heat is transferred in the order of the electrode tab of the battery cell, the electrode terminal of the printed circuit substrate, the circuit wiring, and the conventional PTC element.

The secondary battery pack 200 of the present embodiment is configured in such a manner that the PTC element 213 is embedded in the printed circuit substrate 211, the PTC element 213 is electrically connected to the metal plate 215 by the conductive material 311 filled in the via holes 211 b, and the negative electrode tab 115 of the battery cell is connected to the metal plate 215. Accordingly, heat is transferred in the order of the negative electrode tab 115, the metal plate 215, the conductive material 311, and the PTC element 213.

Referring to FIG. 7, in the case of the conventional secondary battery pack, since the conventional PTC element for detecting the temperature of the battery cell which is increased during operation does not operate normally, the conventional PTC element fails to cut off current when the temperature of the battery cell reaches a desired temperature of 80°C and continues to be increased to 200°C. The battery cell may be burst out at about 120°C.

Referring to FIG.8, in the case of the secondary battery pack 200, the PTC element 213 normally operates to detect the temperature of the battery cell 100 which is increased during operation and cut off the flow of current when the temperature of the battery cell reaches a desired temperature of 80°C. Accordingly, the battery cell 100 is prevented from being burst out.

As described above, since the secondary battery pack according to the one or more embodiments of the present invention allows the PTC element to be embedded in the printed circuit substrate that is electrically connected to the negative electrode tab of the battery cell, heat transfer efficiency of the battery cell is improved. That is, in order to normally operate the PTC element, heat generated in the battery cell should be transferred 100 %, and to this end, the PTC element needs to be located to face the negative electrode tab. If the PTC element is exposed to the outside of the printed circuit substrate, since heat may be outwardly dissipated, the PTC element needs to be buried in the printed circuit substrate to improve heat transfer efficiency.

As discussed above, in embodiments of present invention, a temperature safety device is at least partially contained within the printed circuit board substrate. The temperature safety device can be at least partially embedded in the printed circuit board substrate. For example, the temperature safety device can be fully or partially embedded in the printed circuit board substrate.

In some embodiments, there is at least some free space between the temperature safety device and the printed circuit board substrate. In other words, the temperature safety device can at least partially contained within the printed circuit board substrate with some free space around the temperature safety device. Such free space may be provided in embodiments in which the temperature safety device is fully or partially embedded in the printed circuit board substrate. In such embodiments, the expansion of the temperature safety device may be accommodated by the free space.

In other embodiments, where there is no free space between the temperature safety device and the printed circuit board substrate, the expansion of the temperature safety device may be accommodated by the expansion of the printed circuit board substrate.

While the one or more embodiments of the present invention have been particularly shown and described, it should be understood that there may equivalents and modified embodiments that may substitute those described in this specification. Accordingly, the technical scope of the present disclosure should be defined by the following claims.

## Claims

1. A protection circuit module for a battery pack that includes a battery cell having at least one electrode tab, the protection circuit module comprising:
a printed circuit board substrate;
a temperature safety device adapted to increase its electrical resistance with increased temperature;
wherein the temperature safety device is at least partially contained within the printed circuit board substrate.

2. A protection circuit module according to Claim 1, wherein the temperature safety device is at least partially embedded in the printed circuit board substrate.

3. A protection circuit module according to Claim 1 or 2, wherein the temperature safety device is a positive temperature coefficient element.

4. A protection circuit module according to any one of Claims 1 to 3, further comprising a plate located on an outer surface of the printed circuit board substrate and in electrical contact with the temperature safety device, wherein the plate is adapted to be electrically connected to an electrode tab of the battery cell.

5. A protection circuit module according to Claim 4, wherein the plate is metal, optionally nickel or a nickel based alloy.

6. A protection circuit module according to Claim 4 or 5, wherein the plate is electrically connected to the temperature safety device through at least one via hole that extends from the outer surface of the printed circuit board substrate, the via holes being filled with a conductive material.

7. A protection circuit module according to Claim 4 or 5, wherein the plate is electrically connected to the temperature safety device by a connector that is embedded in the printed circuit board substrate, wherein optionally the connector comprises at least one wire.

8. A protection circuit module according to Claim 6 or 7, wherein the temperature safety device is fully embedded in the printed circuit substrate.

9. A protection circuit module according to Claim 4 or 5, wherein the plate directly contacts the temperature safety device.

10. A protection circuit module according to Claim 9, wherein the temperature safety device is partially embedded in the printed circuit board substrate.

11. A protection circuit module according to any one of Claims 1 to Claim 10, wherein the temperature safety device is a positive temperature coefficient element that comprises a polymer-based conductive composite comprising a polymer and a conductive filler;
wherein optionally the polymer comprises high-density polyethylene, low-density polyethylene, polyvinylidene fluoride, polypropylene or ethylene/polypropylene polymer; and/or
wherein optionally the conductive filler comprises carbon black, a carbon fiber, a metal or a metal oxide filler.

12. A protection circuit module according to any one of Claims 1 to Claim 11, wherein the protection circuit module further comprises a plurality of electronic devices mounted on the printed circuit board substrate.

13. A protection circuit module according to any one of Claims 1 to Claim 12, wherein there is at least some free space between the temperature safety device and the printed circuit board substrate.

14. A battery pack comprising:
a battery cell comprising an electrode assembly, a case housing the electrode assembly, a positive electrode tab and a negative electrode tab electrically coupled to the electrode assembly;
a protection circuit module according to any one of claims 1 to 13,
wherein the protection circuit module is coupled to the positive electrode tab and negative electrode tab of the battery cell.

15. A battery pack according to claim 14 when dependent on Claim 4 or any claims that is dependent on Claim 4, wherein the positive or negative electrode tab is welded to the plate.
